# EUROPEAN PATENT SPECIFICATION

(11) **EP 1 983 331 B1**
(45) Date of publication and mention of the grant of the patent: **13.07.2011**
(21) Application number: 08160013.2
(22) Date of filing: 08.05.2000
(51) Int. Cl.: G01N 21/64

(54) **Optical system for reading a biochip**
Optische Anordnung zur Auswertung eines Biochips
Système optique de lecture de biopuce

(30) Priority: 28.05.1999 JP 14939999; 28.05.1999 JP 14940099; 17.01.2000 JP 2000007724
(43) Date of publication of application: 22.10.2008
(62) Divisional of application: 00109722.9
(73) Proprietor: Yokogawa Electric Corporation, Tokyo 180-8750 (JP)
(72) Inventor: Tanaami, Takeo, Tokyo Tokyo 180-8750 (JP)
(74) Representative: Henkel, Feiler & Hänzel

(56) References cited:
- EP-A- 0 217 619
- WO-A-94/27137
- WO-A-99/23474
- US-A- 5 538 613
- US-A- 5 834 758

## Description

### BACKGROUND OF THE INVENTION

### Field of the Invention

The present invention relates to a system for reading a biochip, such as DNA chips and protein chips, including a reader for reading the biochip.

,

### Description of the Prior Art

The prior art discloses a technique in which deoxyribonucleic acid (DNA) or protein is marked with a fluorescent substance, the substance is excited by irradiation with laser light, and the resulting wavelengths of fluorescence are read so that DNA or protein is detected and analyzed. In this technique, a biochip onto which samples of DNA or protein marked with the fluorescent substance are spotted in arrays is used.

The biochip is read by irradiating and scanning laser light laterally, for example, to excite spots of the fluorescent substance arranged in arrays. The emitted fluorescent light is then condensed by an optical fiber, for example, and received by an optical detector through an optical filter to detect the desired wavelength. When reading of one line (or array) of spots is completed, the biochip is moved longitudinally to repeat the same process as described above. This process is repeated until the biochip is read entirely.

Such a conventional biochip reader as discussed above has had the following problems, however.
1) The biochip has too many spots, is too large in terms of outside dimensions, and has too many arrays.
2) Fluorescence wavelengths are separated by means of an optical filter. It is therefore difficult to separate the wavelengths of polychrome fluorescent light since its spectra mix with each other depending on the concentration of each color.
3) The quantitativeness of measurement deteriorates due to the mixing of fluorescent light with self-emissions, background light or the like. This results in decreased accuracy.
4) A prolonged period of time is required when switching between optical filters and between optical detectors according to the fluorescence color.
5) Although the biochip reader can be speeded up by arranging multiple optical filters and optical detectors and letting the optical detector receive fluorescent light at the same time instead of switching between the filters and between the optical detectors, this approach has the problem of increased cost.
6) Using a scanning confocal microscope with the biochip reader involves an increase in the number of system components. This results in an increase in the system's cost and size, and also takes more time to perform measurement.

An aspect of the present invention is to solve the aforementioned problems by providing in the system a biochip reader which can simultaneously achieve three objectives: downsizing, cost reduction and accuracy improvement.

A biochip, such as a DNA chip, used with the reader has the structure in which several thousand to several ten thousand types of known DNA segments are arranged in arrays on a substrate. If any unknown DNA segment is flowed onto the DNA chip, it combines with a DNA segment of the same type. Taking advantage of this nature of DNA, a known DNA segment that has formed a combination is examined by the biochip reader to identify the properties of the unknown DNA, such as DNA arrangement.

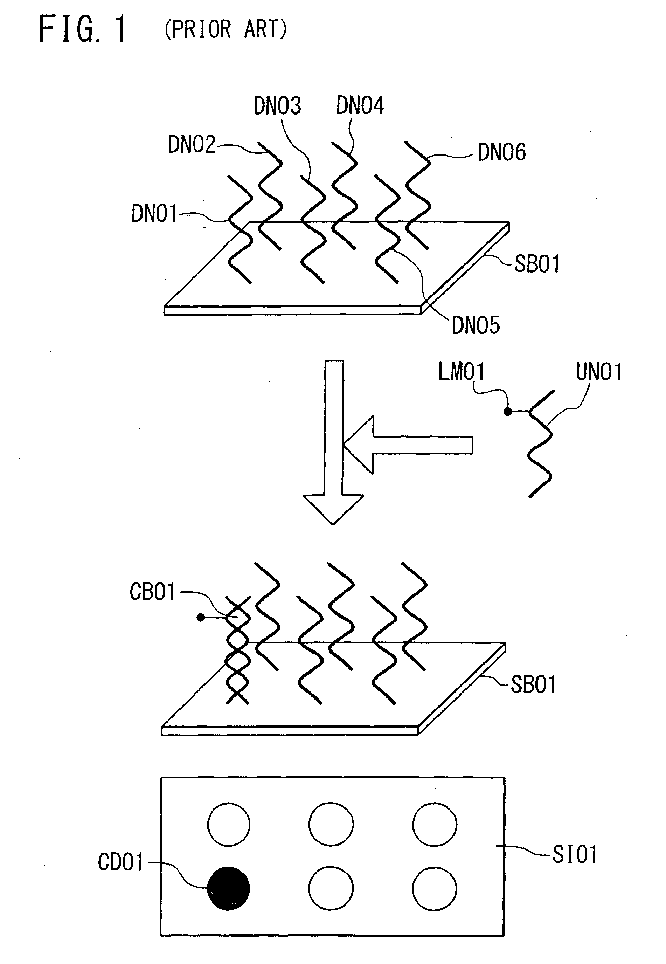

FIG. 1 shows an example of hybridizing such a biochip as described above. In FIG. 1, the six types of DNA segments, DN01 to DN06, are arranged in arrays on a substrate SB01 to form a DNA chip.

UN01 is an unknown DNA segment and is previously given a fluorescent mark, as indicated by LM01 in the figure. When hybridized to the DNA chip, this unknown DNA segment combines with another DNA segment whose arrangement is complementary.

For example, the unknown DNA segment UN01 combines with the known DNA segment DN01, as indicated by CB01 in FIG. 1.

Using the biochip reader, excitation light is irradiated at the DNA chip thus hybridized, in order to detect fluorescent light emitted from the fluorescent mark described earlier. Consequently, it is possible to know which of the known DNA segments the unknown DNA segment has combined with.

For example, in an image resulting from scanning the DNA chip indicated by SI01 in FIG. 1, fluorescent light is observed only at a spot where the DNA combination CB01 has been produced. This means fluorescent light is detected only from the spot indicated by LD01 in FIG. 1.

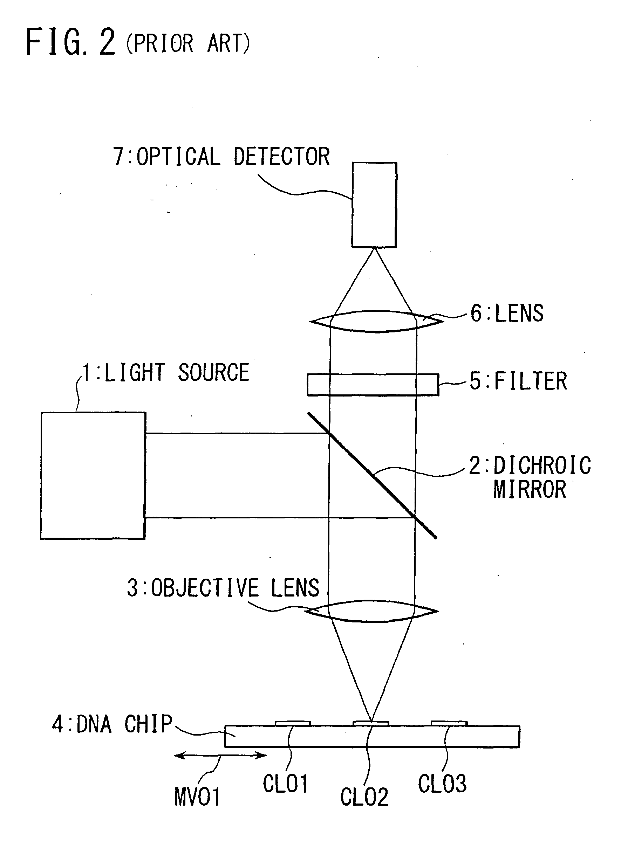

FIG. 2 is a schematic block diagram showing an example of the conventional biochip reader described earlier. In FIG. 2, the numeral 1 indicates a light source for emitting excitation light, such as a laser light source, the numeral 2 indicates a dichroic mirror, the numeral 3 indicates an objective lens, the numeral 4 indicates a DNA chip which is a biochip onto which multiple cells are arranged in arrays, the numeral 5 indicates a filter, the numeral 6 indicates a lens, and the numeral 7 indicates an optical detector, such as a photomultiplier tube.

The symbols CL01 to CL03 are the aforementioned cells in which DNA segments, namely samples, of the same type are arranged.

Light emitted from the light source 1 is reflected by the dichroic mirror 2 as excitation light and condensed onto cells on the DNA chip 4 through the objective lens 3. For example, the excitation light is condensed onto the cell CL02.

Fluorescent light produced by the excitation light in the cell CL02 becomes parallel light as it travels through the objective lens 3, and passes through the dichroic mirror 2. Fluorescent light that has passed through the dichroic mirror 2 travels through the filter 5 and is condensed onto the optical detector 7 by the lens 6.

The DNA chip 4 is scanned by a drive means which is not shown in FIG. 2. For example, the DNA chip 4 is scanned in the direction indicated by MV01 in FIG. 2 so that the excitation light is irradiated at the remaining cells CL01 and CL03 on the DNA chip 4.

Consequently, it is possible to identify the arrangement of the unknown DNA segment from the position of a cell where fluorescence has taken place.

Dust may deposit on the DNA chip 4, however, for such reasons as the mixing of foreign matter with a liquid in which the unknown DNA segment is hybridized or the way subsequent processes are carried out. If the dust is organic, the excitation light causes the dust to emit fluorescent light that is more intense than that emitted by a cell. This results in the problem that the fluorescent light serves as noise and therefore deteriorates the S/N ratio.

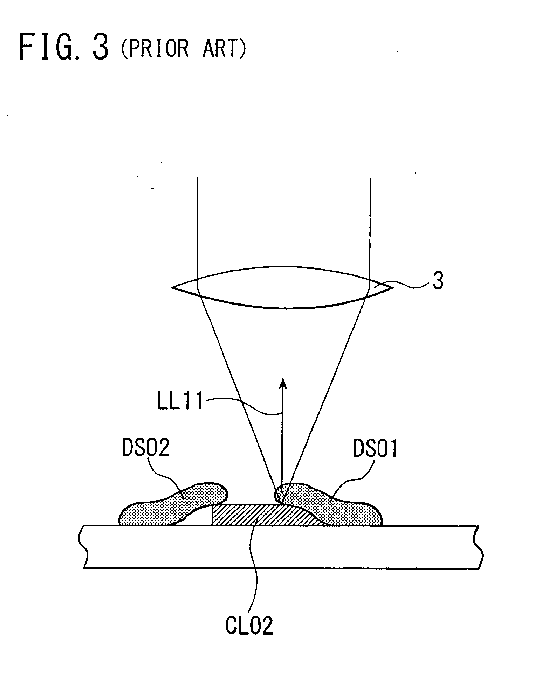

FIG. 3 is an enlarged view of the cell CL02 shown in FIG. 2. Members indicated by 3, 4 and CL02 are the same as those in FIG. 2. If the DNA chip 4 is contaminated with dust particles marked DS01 and DS02 in FIG. 3, fluorescent light indicated by LL11 is produced by the excitation light in addition to fluorescent light emitted from the cell CL02. This deteriorates the S/N ratio.

For this reason, a confocal optical system has been used with the conventional biochip reader to detect only the fluorescent light produced by cells by removing fluorescent light produced by dust. Alternatively, a DNA chip has been hermetically sealed to prevent it from being contaminated with dust. However, these measures have caused the problems not only of increased cost but also of insufficiently improved S/N ratio.

The objective of the present invention is therefore to provide a system for reading a biochip including a reader whose S/N ratio is superior and whose cost can be reduced.

WO 99/23474 A discloses an optical array system and a reader for micro titer plates, wherein the optical system is made of lens arrays and normal lenses arranged to allow parallel reading of plural wells of a micro titer plate in absorption, fluorescence and luminescence.

WO 94/27137 A discloses an apparatus and methods for evanescent light fluoroimmunoassays. The appratus employs a planar waveguide with an integral semi-cylindrical lens integrally attached to the waveguide adjacent a receiving edge of the wave guide for receiving light from a light source. Detection means are provided for simultaneously separately collecting a plurality of fluoreszent signals each corresponding to an individual one of a plurality of patches of immobilized capture molecules provided on one of the surfaces of the waveguide.

EP-A-0217619 discloses an apparatus and method for optically assaying an analyte borne on a support using a light source to irradiate a sample of the analyte and receiving light therefrom by a group of memory cells in a dynamic RAM over a given exposure time. The characteristic of the analyte to be determined is assayed by measurement of the states of the memory cells after such exposure.

### SUMMARY OF THE INVENTION

In order to achieve the aforementioned object, the present invention provides a system as defined in claim 1 for reading a biochip.

which includes a biochip reader comprising a light source for emitting excitation light, a dichroic mirror for reflecting or transmitting the excitation light, an objective lens for condensing the excitation light reflected or transmitted by the dichroic mirror and projecting fluorescent light produced at the biochip onto the dichroic mirror, an optical detector for detecting the fluorescent light, and a lens for condensing the excitation light reflected or transmitted by the dichroic mirror onto the detector. In this arrangement, the biochip is fabricated using a transparent substrate that can transmit both the excitation light and fluorescent light and the excitation light is irradiated from the side opposite to the side where the samples are arranged on the biochip. According to this configuration, it is possible to improve the S/N ratio of the biochip reader and reduce the cost thereof.

### BRIEF DESCRIPTION OF THE DRAWINGS

FIG. 1 is a schematic view showing an example of hybridization seen in biochips.
FIG. 2 is a schematic block diagram showing an example of a conventional biochip reader.
FIG. 3 is an enlarged view of a cell.
FIG. 4 (not used)
FIG. 5 (not used).
FIG. 6 is a schematic block diagram showing one example of a biochip reader useful in accordance with the present invention.
FIG. 7 is a schematic view showing an arrangement of samples on a biochip.
FIG. 8 is a schematic view showing pieces of spectroscopic information indicated on an optical detector.
FIG. 9 is a schematic view showing pieces of spectroscopic information provided when samples arranged in linear arrays are measured.
FIG. 10 is a schematic block diagram showing another example of the biochip reader.
FIG. 11 is a schematic view showing spectroscopic images obtained when pieces of spectroscopic information are developed in a two-dimensional way.
FIG. 12 is a schematic block diagram showing yet another example of the biochip reader.
FIG. 13 is a schematic block diagram showing still another example of the biochip reader.
FIG. 14 is a graph showing the distribution of self-emission, etc.
FIG. 15 is a schematic view showing the relationship between samples and apertures.
FIG. 16 is a schematic block diagram showing one example of a biochip reader used in the system in accordance with the present invention.
FIG. 17 is a partially enlarged view of a cell when an immersion lens is used.
FIG. 18 is a partially enlarged view of a cell when a solid immersion lens (SIL) is used.
FIG. 19 is a schematic view showing comparison between DNA chips with and without an anti-reflection coating.

### DETAILED DESCRIPTION OF THE PREFERRED EMBODIMENTS

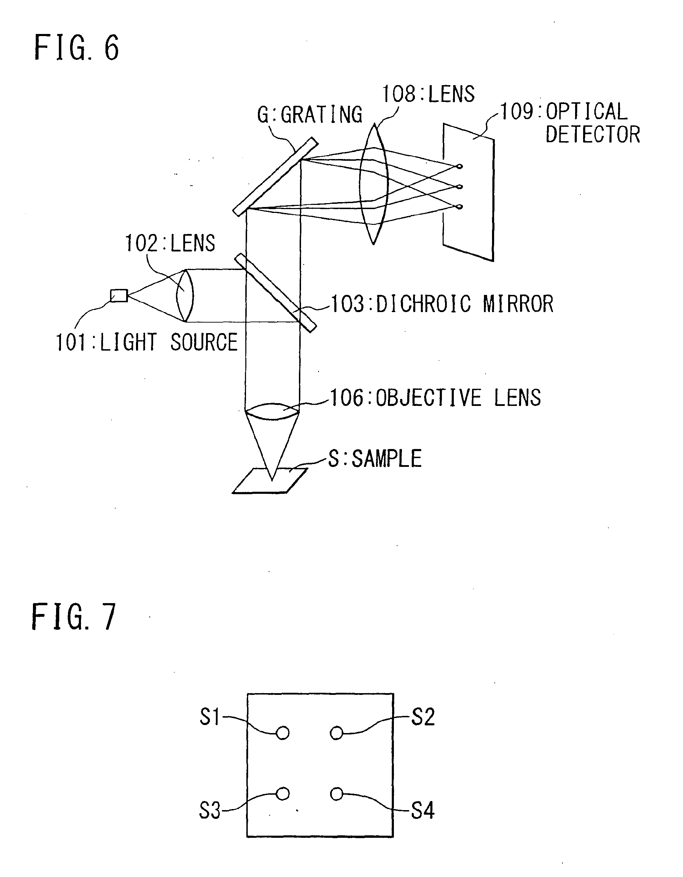

The present invention is described in detail below using the accompanying drawings. FIG. 6 is a schematic block diagram showing one example of a biochip reader that can be used in the system in accordance with the present invention.

In FIG. 6, the numeral 101 indicates a light source for emitting laser light, the numeral 102 indicates a lens for making parallel the laser light emitted by the light source 101, the numeral 103 indicates a dichroic mirror, the numeral 106 indicates an objective lens, the symbol S indicates a sample, the symbol G indicates a grating, the numeral 108 indicates a lens, and the numeral 109 indicates an optical detector.

Light (excitation light) emitted by the light source 101 is made parallel by the lens 102, is reflected by the dichroic mirror 103, is condensed through the objective lens 106, and is irradiated at the sample S. This irradiation causes the sample S to emit fluorescent light (whose wavelength differs from that of the excitation light). The fluorescent light then follows back the path that the excitation light followed, by passing through the objective lens 106 and reaching the dichroic mirror 103.

The fluorescent light that was emitted from the sample S and transmitted through the dichroic mirror 103 diffracts at the grating G. The diffraction angle of the fluorescent light is relative to its wavelength. The fluorescent light thus diffracted by the grating G is condensed onto the optical detector 109 through the lens 108. As the optical detector 109, a camera is used, for example.

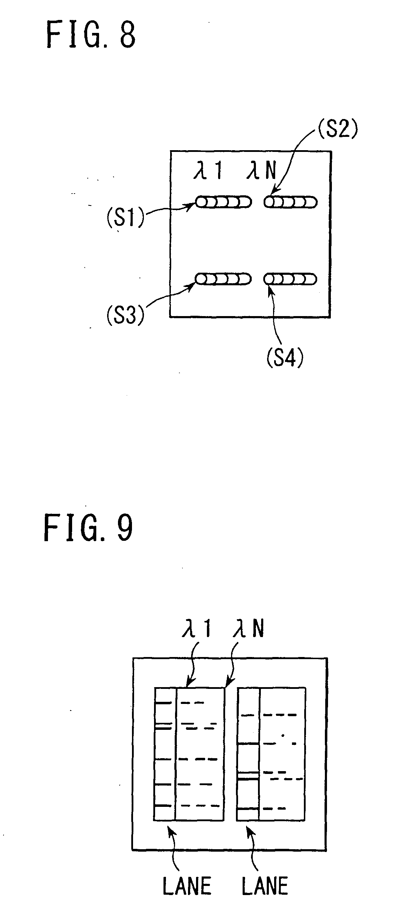

If, for example, spots of four samples S1 to S4 are arranged on a biochip as shown in FIG. 7, spectroscopic images (spectra) with wavelengths of λ1 to λn are formed for these respective samples in spatially different positions on the optical detector 109, as shown in FIG. 8. These spectroscopic images are spectroscopic information and can well be measured with a monochrome camera. As is evident from the figures, gaps between the spots are skillfully used in this example.

Although the example described above is based on a biochip on which spots are placed sporadically in arrays, the present invention is not limited to this sample arrangement. The invention can also be applied to fluorescence patterns of electrophoresis arranged in linear arrays. In this case, images shown in FIG. 9 are obtained. That is, spectroscopic images with wavelengths of λ1 to λn are formed for the electrophoresis pattern of each lane (along the longitudinal axis) in spatially different positions along the lateral axis.

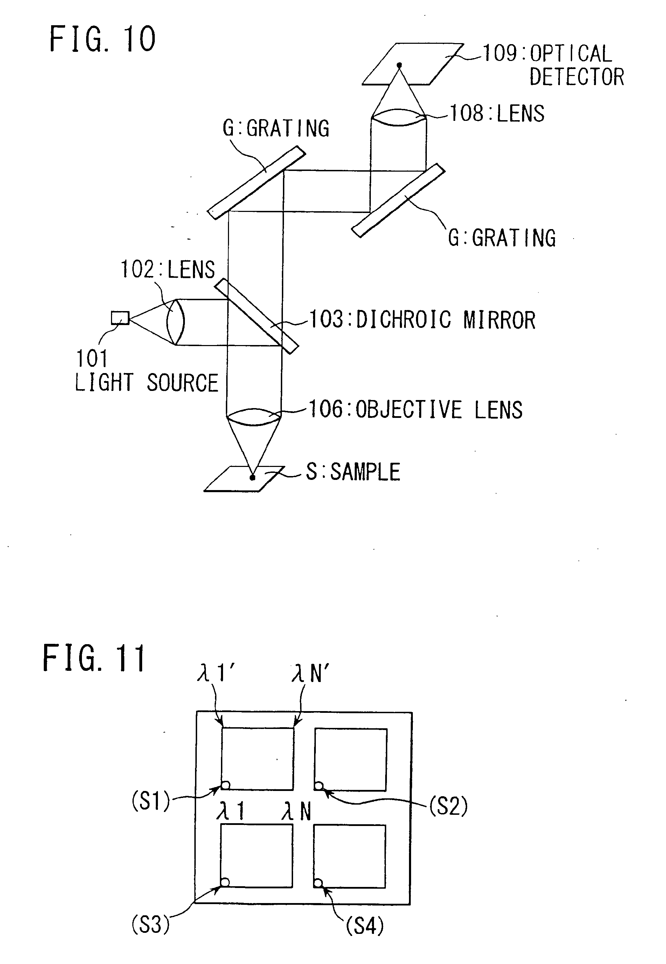

FIG. 10 is a schematic block diagram showing another example of the biochip reader. In the example of FIG. 10, two gratings are arranged so that their directions of diffraction are at right angles to each other. According to this configuration, two-dimensional spectra are obtained as shown in FIG. 11. If, for example, the spectral pattern is graduated in 100-nm increments laterally (X-axis direction) and in 10-nm increments longitudinally (Y-axis direction), it is possible to perform measurement with a wider dynamic range and higher precision.

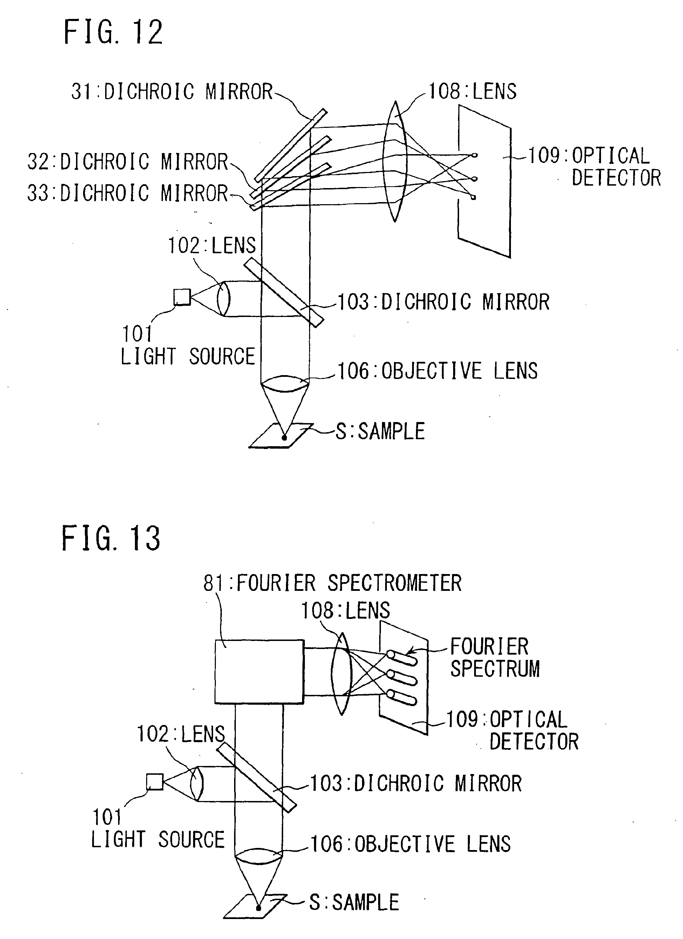

FIG. 12 shows an example in which dichroic mirrors are used in place of the gratings. These dichroic mirrors are combinations of optical filters with optical shift means. As shown in FIG. 12, dichroic mirrors (optical filters) 31, 32 and 33 with different transmission wavelengths are stacked on the optical axis. In this example, the angle of each dichroic mirror is determined so that light is reflected by the dichroic mirror at the same angle as it diffracts at a grating (equivalent to the optical shift means).

FIG. 13 is an example in which a non-moving Fourier spectrometer 81, such as a Savart or a Michelson model, is used in place of the gratings or dichroic mirrors. In this example, images formed at the optical detector 109 are not spectra themselves but an image of interference fringes. Consequently, spectra can be obtained by using computation means (not shown in the figure) and submitting this image to a Fourier transform process.

It should be noted that the measurement resolution can be further improved by using a confocal microscope or 2 photon microscope instead of a regular fluorescent substance or a camera. The quantitativeness of measurement is also improved because the slice effect of the confocal method makes it possible to always measure a constant volume of samples even if the thickness of each sample varies. In this example, the confocal microscope may be of the non-scanning type.

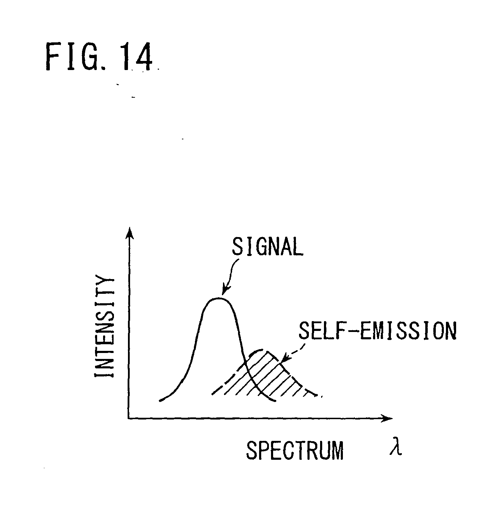

As shown in FIG. 14, such noise as self-emissions whose wavelength slightly differs from that of the original fluorescent light can be removed easily because the properties of the reagent to be used are already known. If necessary, a signal spectrum may be separated using a regression method. With this approach, it is possible to easily achieve high precision and high sensitivity.

For spectroscopy, it is necessary to restrict the area of measurement using a shield means, such as slits. If the area of the shield means is greater than the area of a sample, dead spaces are produced in the imaging area of an optical detector. Conversely, if the area of the shield means is smaller than the area of the sample, dead spaces are produced in the area of the sample.

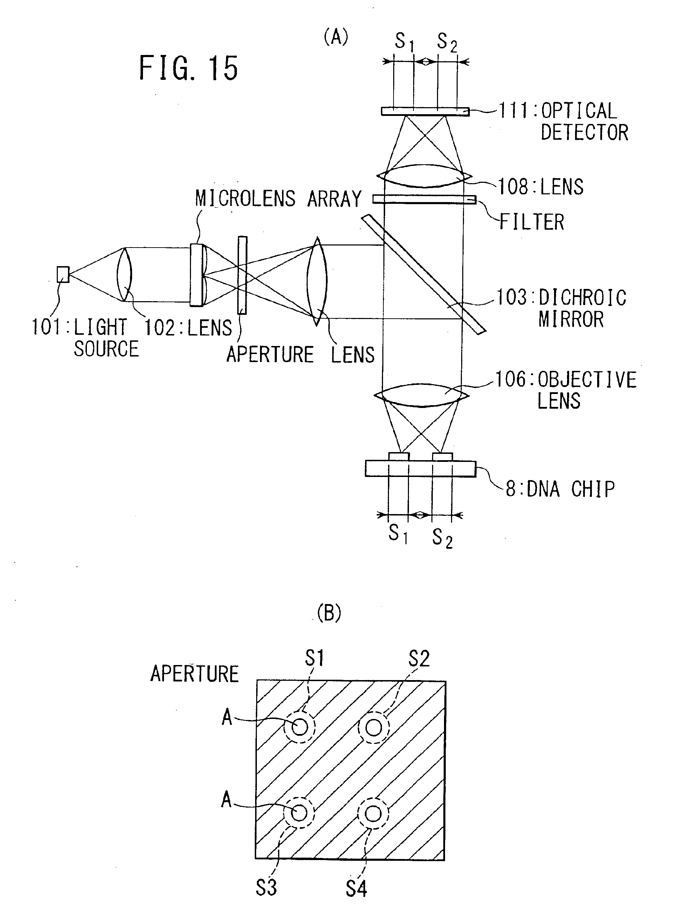

For this reason, an aperture A is optically aligned with the area of a sample S1 or with part of the sample S1, for example, as shown in FIG. 15 (A) and FIG. 15 (B). This arrangement makes it possible to most effectively use both the area of the sample S1 and the imaging area of the optical detector. This arrangement is also effective for removing errors due to disorder in the edges of a sample. The shape of the aperture may not necessarily be circular; it may be rectangular instead.

The aperture shown in FIG. 15 (A) or FIG. 15 (B) or the rectangular aperture described above may be used as a pinhole or slit for a non-scanning confocal microscope. With this approach, it is possible for even a small and inexpensive microscope to achieve the high resolution characteristic of confocal microscopes and the quantitativeness due to the slice effect.

In this example, the detection means is not limited to the spectroscopy method shown in FIG. 6, but may be a regular filter method. Luminous energy can be increased further by attaching a microlens array MA to the light-source side of an aperture AP. Use of the microlens array MA eliminates the need for the aperture AP since light beams are condensed onto the focal point of each microlens.

As described above, the following advantages are offered in accordance with these examples.
1) Multiple wavelengths of fluorescence can be measured simultaneously without having to change the filter and/or optical detector. It is therefore possible to realize a compact biochip reader.
2) A monochrome camera may be used to photograph spectra displayed on an optical detector for economical analysis.
3) Spectra displayed on an optical detector can be easily changed to two-dimensional spectra for higher precision.
4) The given area of a biochip can be most effectively used by aligning the aperture of excitation light or the spot of light condensed by a microlens array with a sample.

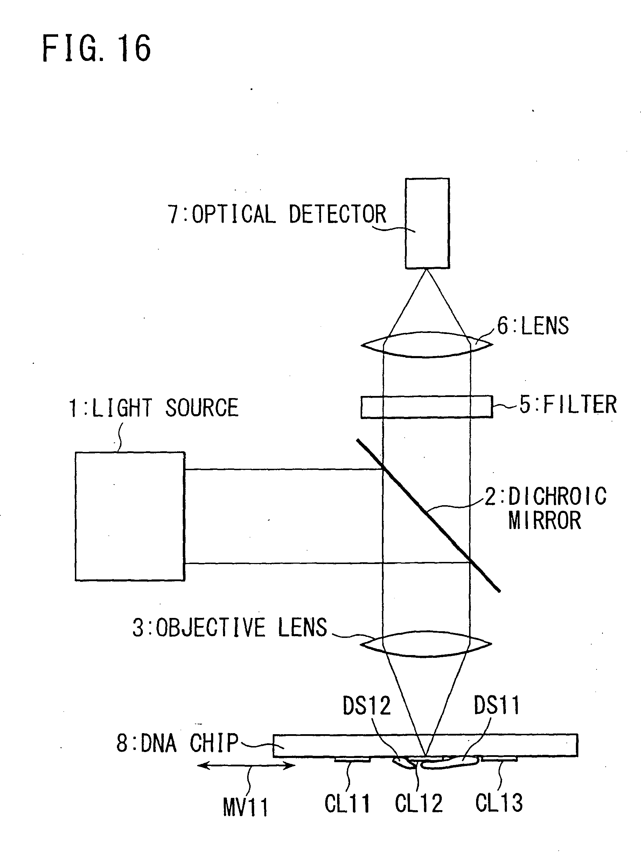

FIG. 16 is a schematic block diagram showing one embodiment of a biochip reader used in the system in accordance with the present invention.

In FIG. 16, members indicated by 1 to 3 and 5 to 7 are the same as those in FIG. 2, and the numeral 8 indicates a DNA chip using a plastic or glass substrate which allows excitation light or fluorescent light to pass through it. Members indicated by CL11 to CL13 are cells the same as those described earlier on which multiple samples of DNA segments of the same type are arranged. The symbols DS11 and DS12 indicate dust particles adhering to the cell CL12 on the DNA chip 8.

Light emitted as excitation light from a light source 1 is reflected by a dichroic mirror 2 and condensed onto a cell on the DNA chip 8 through an objective lens 3. At this point, the excitation light is irradiated from the side opposite to the side where the cells are arranged.

For example, the excitation light is irradiated at the cell CL12 through the transparent substrate of the DNA chip 8. Fluorescent light produced by the excitation light at the cell is made parallel through the objective lens 3, and passes through the dichroic mirror 2. The fluorescent light that has passed through the dichroic mirror 2 is condensed by a lens 6 onto the optical detector 7 through a filter 5. At this point, the fluorescent light produced by the excitation light at the cell passes through the DNA chip 8 and is output to the side opposite to the side where the cells are arranged.

The DNA chip 8 is scanned by a drive means which is not shown in the figure. For example, the DNA chip 8 is scanned in the direction indicated by MV11 in FIG. 16 so that the excitation light is irradiated at the remaining cells CL11 and CL13 on the DNA chip 8.

Liquid in which unknown DNA segments are hybridized is flowed onto the side where the cells, such as the cell CL12, shown in FIG. 16 are arranged. The dust particles DS11 and DS12 adhere to the side of the substrate where the cells are arranged on the DNA chip 8.

On the other hand, no foreign matter such as the dust particle DS11 adheres to the side opposite to the side where the cells are arranged on the DNA chip 8.

Consequently, fluorescent light resulting from the dust particle and serving as a noise component can be reduced by irradiating the excitation light from the side opposite to the side where the cells are arranged on the DNA chip 8. For example, the excitation light is irradiated at the neighbors of a boundary between the substrate of the DNA chip and a cell.

In addition, a simple optical system can be used with the biochip reader and there is no need for hermetically shielding the DNA chip 8. These advantages make it possible to reduce the cost of the biochip reader.

It should be noted that although only a DNA chip is shown as an example of biochips when explaining figures, including FIG. 16, the biochips are, as the matter of course, not limited to a DNA chip only. They may be such chips as fabricated by arranging in arrays segments of ribonucleic acid (RNA), protein or sugar chain on a transparent substrate.

In this case, RNA segments undergo hybridization as with DNA segments, while protein segments and sugar chain segments are submitted to an antigen-antibody reaction. In either case, segments of known samples combine with segments of unknown samples marked with a fluorescent substance.

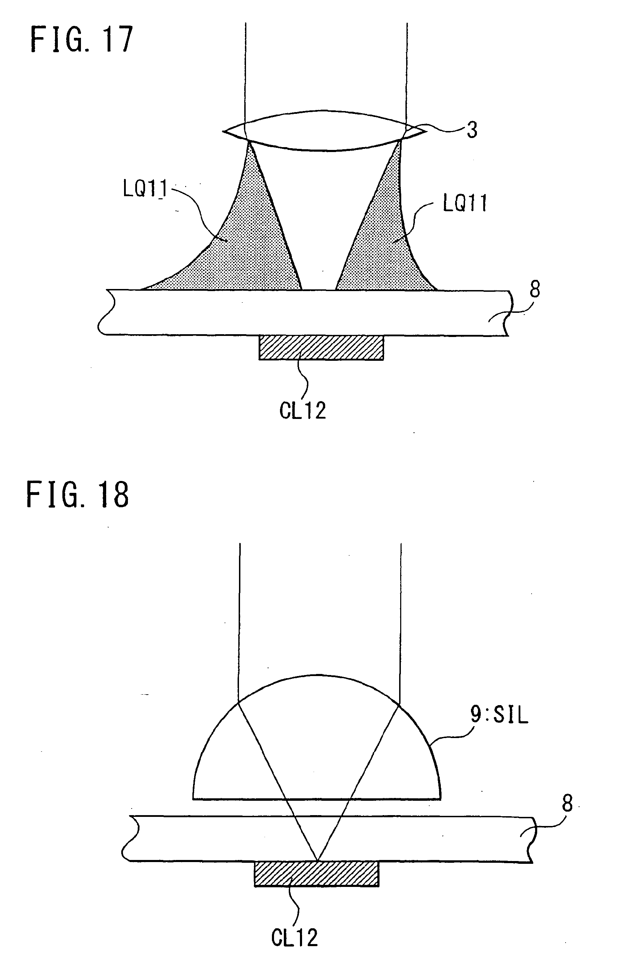

In addition, although the objective lens 3 shown in FIG. 16 is of the non-immersion type, it may be of the immersion type, such as a water immersion or an oil immersion lens. FIG. 17 is a partially enlarged view of the cell CL12 shown in FIG. 16 when an immersion lens is used. Members indicated by 3, 8 and CL12 in FIG. 17 are the same as those in FIG. 16.

In FIG. 17, the symbol LQ11 indicates a fluid such as water or oil filled into the gap between the objective lens 3 and the DNA chip 8. In this arrangement the numerical aperture (NA) is improved, thereby improving the S/N ratio further, because of the refractive index of fluid, such as water or oil. For this arrangement, however, the method in which beams of excitation light itself are scanned is more suitable than scanning the DNA chip 8 or the objective lens 3.

FIG. 18 is a partially enlarged view of the cell CL12 shown in FIG. 16 when a solid immersion lens (SIL), which has the same effect as an immersion lens, is used. In FIG. 18, members indicated by 8 and CL12 are the same as those in FIG. 16, and the numeral 9 indicates an SIL. Also, in this arrangement the numerical aperture (NA) is improved by the SIL, thereby improving the S/N ratio further.

If the substrate of a DNA chip 8 needs to be conductive, it may be prepared by placing transparent electrodes made of an indium-tin oxide (ITO) film on a transparent substrate. Hybridization can be accelerated by applying a positive voltage to the electrodes because DNA is charged with negative electricity.

In an embodiment of the invention an anti-reflection coating is placed on the surface of the DNA chip 8's substrate opposite to the surface where cells are arranged.

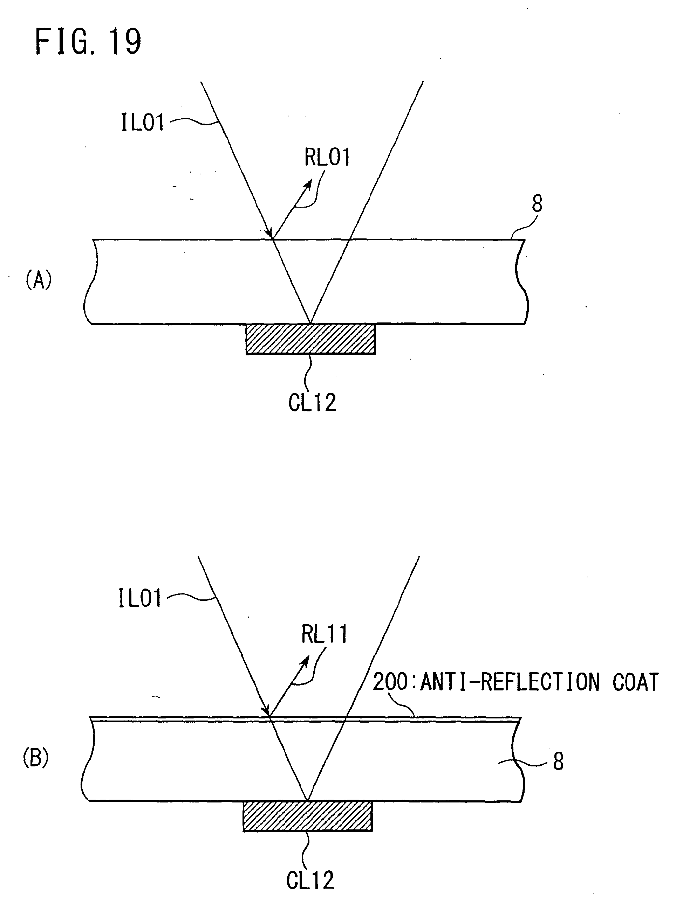

FIG. 19 is a schematic view showing comparison between DNA chips with and without an anti-reflection coating.

In FIG. 19 (A), members indicated by 8 and CL12 are the same as those in FIG. 16, and the numeral 200 indicates an anti-reflection coating. The structure of the DNA chip 8 shown in FIG. 19 (A) is the same as the one shown in FIG. 16. In FIG. 19 (B), the anti-reflection coating 200 is formed on one side of the substrate of the DNA chip 8 opposite to the side where cells are arranged. In the case of FIG. 19 (A), the ratio of reflected light RL01 to incident light IL01 is approximately "4%". In the case of FIG. 19 (B), however, the ratio of reflected light RL11 to incident light IL11 can be reduced to as small as approximately "0.5%". Consequently, the luminous energy of excitation light irradiated at cells on the DNA chip 8 increases, improving the S/N ratio.

The side of the substrate of the DNA chip 8 where cells are arranged may be in the state of dryness. It is also possible to leave that side of the substrate wetted with hybridization liquid.

Although a laser light source has been mentioned earlier as an example of the source of excitation light, a non-laser light source, such as an LED lamp, xenon lamp, halogen lamp or any other white light source, may be used instead.

If a confocal optical system is used with the biochip reader, fluorescent light produced by dust particles can be removed more effectively. Consequently, it is possible to improve the S/N ratio further, compared with biochip readers with a non-confocal optical system.

As is evident from the explanations given above, the present invention offers the following advantages.
- The S/N ratio can be improved by irradiating excitation light from one side of the biochip opposite to the side where samples are arranged. Consequently, it is possible to reduce the cost of the biochip reader.
- The numerical aperture (NA) can be improved by using an immersion lens or a solid immersion lens (SIL) as the objective lens, thereby further improving the S/N ratio.
- The S/N ratio can be still further improved, compared with biochip readers with a non-confocal optical system, because a confocal optical system is used with the biochip reader of the present invention.
- The luminous energy of excitation light irradiated at samples increases because the anti-reflection coating is formed on one side of the substrate of the DNA chip opposite to the side where the samples are arranged. Consequently, it is possible to further improve the S/N ratio.
- Transparent electrodes have been formed on a transparent substrate. This arrangement makes it possible to accelerate hybridization by applying a positive voltage to the electrodes because DNA is charged with negative electricity.
- If samples used with the biochip reader are either DNA or RNA segments, known samples having a complementary sequence combine by hybridization with unknown samples marked with a fluorescent substance. Consequently, it is possible to identify the sequence of the unknown samples.
- If samples used with the biochip reader are either protein segments or sugar chain segments, known samples combine by antigen-antibody reaction with unknown samples. Consequently, it is possible to identify the sequence of the unknown samples.

In several examples shown in FIG. 6 to FIG. 15, it is possible to use the types of samples mentioned above, that is, DNA, RNA, protein and sugar chain.

In several embodiments shown in FIG. 16 to FIG. 19, their optical detector may be one of the means shown in FIG. 6, FIG. 10, FIG. 12 and FIG. 13.

## Claims

1. A system for reading a biochip (8), wherein said system includes a biochip reader comprising:
a light source (1) for emitting excitation light;
a dichroic mirror (2) for reflecting said excitation light or allowing said excitation light to pass through;
an objective lens (3;9) for condensing light that has been reflected by or passed through said dichroic mirror (2) onto a biochip (8) and projecting fluorescent light produced at said biochip (8) onto said dichroic mirror (2);
an optical detector (7) for detecting said fluorescent light; and
a lens (6) for condensing said fluorescent light that has been reflected by or passed through said dichroic mirror (2) onto said optical detector (7);
wherein said biochip (8) is configured using a transparent substrate allowing for passage of said excitation light and of said fluorescent light, and **characterized in that** said reader is arranged such that said excitation light is irradiated from one side of said biochip (8) opposite to the side where samples (CL) are arranged; and **in that**
an anti-reflection coating (200) is formed on the side of said biochip (8) opposite to the side where the samples (CL) are arranged.

2. The system for reading a biochip (8) as defined in claim 1, wherein said objective lens (3) is an immersion lens.

3. The system for reading a biochip (8) as defined in claim 2, wherein said objective lens (3) is a water immersion lens or an oil immersion lens.

4. The system for reading a biochip (8) as defined in claim 1, wherein said objective lens is a SIL (9).

5. The system for reading a biochip (8) as defined in claim 1, wherein an optical system is a confocal optical system.

6. The system for reading a biochip (8) as defined in any one of claims 1 to 5, wherein the anti-reflection coating (200) is formed on a surface of said transparent substrate.

7. The system for reading a biochip (8) as defined in claim 6, wherein said anti-reflection coating (200) is made of an indium-tin oxide film.

8. Use of the system for reading a biochip (8) as defined in any one of claims 1 to 7, wherein said samples arranged on said biochip (8) are DNA segments, RNA segments, protein segments, or sugar chain segments.

## Patentansprüche

1. Ein System zum Lesen eines Biochips (8), wobei das System ein Biochip-Lesegerät umfasst mit:
einer Lichtquelle (1) zum Emittieren von Anregungslicht,
einem dichroitischen Spiegel (2) zum Reflektieren des Anregungslichts oder zum Passierenlassen des Anregungslichts,
einer Objektivlinse (3;9) zum Kondensieren von Licht, das von dem dichroitischen Spiegel (2) reflektiert wurde oder diesen passiert hat, auf einen Biochip (8) und zum Projizieren von fluoreszierendem Licht, das an dem Biochip (8) erzeugt wurde, auf den dichroitischen Spiegel (2),
einem optischen Detektor (7) zum Erfassen des fluoreszierenden Lichts, und
einer Linse (6) zum Kondensieren des fluoreszierenden Lichts, das durch den dichroitischen Spiegel (2) reflektiert wurde oder diesen passiert hat, auf den optischen Detektor (7),
wobei der Biochip (8) unter Verwendung eines transparenten Substrats, das den Durchgang des Anregungs- und des fluoreszierenden Lichts erlaubt, konfiguriert ist,
**dadurch gekennzeichnet, dass**
das Lesegerät so angeordnet ist, dass das Anregungslicht von einer Seite des Biochips (8) aufgestrahlt wird, die der Seite gegenüberliegt, an der Proben (CL) angeordnet sind, und dass
eine Antireflektionsbeschichtung (200) an der Seite des Biochips (8) ausgebildet ist, die der Seite gegenüberliegt, an der die Proben (CL) angeordnet sind.

2. Das System zum Lesen eines Biochips (8) gemäß Anspruch 1, wobei die Objektivlinse (3) eine Immersionslinse ist.

3. Das System zum Lesen eines Biochips (8) gemäß Anspruch 2, wobei die Objektivlinse (3) eine Wasser-Immersionslinse oder eine Öl-Immersionslinse ist.

4. Das System zum Lesen eines Biochips (8) gemäß Anspruch 1, wobei die Objektivlinse eine SIL (9) ist.

5. Das System zum Lesen eines Biochips (8) gemäß Anspruch 1, wobei ein optisches System ein konfokales optisches System ist.

6. Das System zum Lesen eines Biochips (8) gemäß einem der Ansprüche 1 bis 5, wobei die Antireflektionsbeschichtung (200) an einer Oberfläche des transparenten Substrats ausgebildet ist.

7. Das System zum Lesen eines Biochips (8) gemäß Anspruch 6, wobei die Antireflektionsbeschichtung (200) aus einem Indium-Zinn-Oxidfilm hergestellt ist.

8. Verwendung des Systems zum Lesen eines Biochips (8) gemäß einem der Ansprüche 1 bis 7, wobei die auf dem Biochip (8) angeordneten Proben DNA-Segmente, RNA-Segmente, Proteinsegmente oder Zuckerkettensegmente sind.

## Revendications

1. Système de lecture d'une biopuce (8), ce système comportant un lecteur de biopuce comprenant :
une source (1) lumineuse pour émettre de la lumière d'excitation ;
un miroir (2) dichroïque pour réfléchir la lumière d'excitation ou permettre à la lumière d'excitation de le traverser ;
une lentille (3 ; 9) formant objectif pour condenser de la lumière, qui a été réfléchie par le miroir (2) dichroïque ou qui l'a traversé sur une biopuce (8), et pour projeter de la lumière fluorescente produite à la biopuce sur le miroir (2) dichroïque ;
un détecteur (7) optique pour détecter de la lumière fluorescente ; et
une lentille (6) pour condenser sur le détecteur (7) optique la lumière fluorescente, qui a été réfléchie par le miroir (2) dichroïque ou qui l'a traversé ;
dans lequel la biopuce (8) est configurée en utilisant un substrat transparent permettant le passage de la lumière d'excitation et de la lumière fluorescente et **caractérisé en ce que** le lecteur est conçu de manière à ce que la lumière d'excitation soit émise d'un côté de la biopuce (8) opposé au côté où des échantillons (CL) sont disposés ; et **en ce que**
un revêtement (20) anti-réfléchissant est formé du côté de la biopuce (8) opposé au côté où les échantillons (CL) sont disposés.

2. Système de lecture d'une biopuce (8) tel que défini à la revendication 1, dans lequel la lentille (3) formant objectif est une lentille à immersion.

3. Système de lecture d'une biopuce (8) tel que défini à la revendication 2, dans lequel la lentille (3) à immersion est une lentille à immersion dans l'eau ou une lentille à immersion dans l'huile.

4. Système de lecture d'une biopuce (8) tel que défini à la revendication 1, dans lequel la lentille formant objectif est une SIL (9).

5. Système de lecture d'une biopuce (8) tel que défini à la revendication 1, dans lequel un système optique est un système optique confocal.

6. Système de lecture d'une biopuce (8) tel que défini à l'une quelconque des revendications 1 à 5, dans lequel le revêtement (200) anti-réfléchissant est formé sur une surface du substrat transparent.

7. Système de lecture d'une biopuce (8) tel que défini à la revendication 6, dans lequel le revêtement (200) anti-réfléchissant est en un film d'indium-oxyde d'étain.

8. Utilisation du système de lecture d'une biopuce (8) tel que défini dans l'une quelconque des revendications 1 à 7, dans lequel les échantillons, disposés sous la biopuce (8) sont des segments d'ADN, des segments d'ARN, des segments de protéine ou des segments de chaîne de sucre.
